## Europäisches Patentamt
## European Patent Office
## Office européen des brevets

(11) Veröffentlichungsnummer: **0 128 572**
**A2**

# EUROPÄISCHE PATENTANMELDUNG

(21) Anmeldenummer: **84106622.8**

(22) Anmeldetag: **08.06.84**

(51) Int. Cl.³: **G 01 W 1/10**

(30) Priorität: **09.06.83 DE 3320908**

(43) Veröffentlichungstag der Anmeldung: **19.12.84**
**Patentblatt 84/51**

(84) Benannte Vertragsstaaten: **AT BE CH DE FR GB IT LI LU NL SE**

(71) Anmelder: **Baumer, Hans, Buschingstrasse 43/V, D-8000 München 80 (DE)**

(72) Erfinder: **Baumer, Hans, Buschingstrasse 43/V, D-8000 München 80 (DE)**

(74) Vertreter: **Kinzebach, Werner, Dr., Patentanwälte Reitstötter, Kinzebach und Partner Postfach 780, D-8000 München 43 (DE)**

(54) Verfahren und Vorrichtung zur Überwachung des Wettergeschehens.

(57) Die Erfindung betrifft ein Verfahren zur Überwachung des Wettergeschehens mittels Analyse der Bewegungen von Luftmassen, wobei man diese bestimmt, indem man in der Atmosphäre entstehende elektromagnetische Strahlung mittels richtungsselektiver VLF-Empfangsanlagen empfängt und die in verschiedenen Frequenzbändern auftretenden Ereignishäufigkeiten bestimmt, vergleicht und anzeigt, sowie Vorrichtungen zur Durchführung des Verfahrens.

0128572

Die Erfindung betrifft ein Verfahren zur Überwachung des Wettergeschehens mittels Analyse der Bewegungen von Luftmassen, sowie eine Vorrichtung zur Durchführung des Verfahrens.

Das Wettergeschehen wird seit sehr langer Zeit über den Verbund von Meßstationen überwacht, die ihre Meßdaten an eine (oder mehrere) Zentralen weitergeben. Aus den Meßdaten werden die Bewegungen von Luftmassen, sowie deren Eigenschaften ermittelt und daraus Wettervorhersagen getroffen. Diese bekannte Methode hat jedoch eine Reihe von Nachteilen. So ist zum Beispiel die Genauigkeit der Analyse der Bewegungen von Luftmassen nicht nur von der Art der Meßgeräte, sondern insbesondere von der Anzahl und der Verteilung der Meßstationen abhängig. In dem Fall, in dem man sich z.B. auf hoher See befindet, sind in der näheren, meist auch in der weiteren Umgebung keine Meßstationen vorhanden, von denen man Daten über das zu erwartende oder auch nur das bestehende Wetter erfahren könnte. Die durch Satelliten gewonnenen Daten können zum einen nur mit aufwendigen Anlagen empfangen werden, zum anderen liefern die Satelliten mehr oder minder ausschließlich großräumige, also z.B. für die Hochseeschiffahrt ungenaue Daten. Darüber hinaus ist die Häufigkeit der Ablesung in den Meßstationen und deren Verrechnung aufgrund der ungeheuren Datenmengen relativ gering, so daß nur in großen Zeitintervallen aktuelle Wetterberichte ausgegeben werden können.

Ausgehend vom oben genannten Stand der Technik ist es Aufgabe der vorliegenden Erfindung, ein Verfahren aufzuzeigen, durch das man unabhängig vom Standort zumindest bestimmte, für den Beobachter relevante Auswirkungen des Wettergeschehens zu jedem Zeitpunkt Tag und Nacht überwachen und die zu erwartende Entwicklung gegebenenfalls vorhersagen kann.

0128572

Diese Aufgabe wird durch ein Verfahren zur Überwachung des Wettergeschehens mittels Analyse der Bewegungen von Luftmassen gelöst, das dadurch gekennzeichnet ist, daß man die Bewegungen der Luftmassen bestimmt, indem man in der Atmosphäre entstehende elektromagnetische Strahlung im Frequenzbereich zwischen 3 kHz und 100 kHz mittels mindestens einer richtungsselektiven Radioempfangsanlage empfängt, in mindestens zwei voneinander im wesentlichen getrennte Frequenzbänder aufteilt, die innerhalb der Frequenzbänder auftretenden Ereignishäufigkeiten getrennt voneinander bestimmt, die Ereignishäufigkeiten miteinander vergleicht und das Ergebnis in mindestens zwei Stufen anzeigt. Dieses Verfahren ist für die Analyse des Wettergeschehens bis zu einer Entfernung von etwa 500 km vom Standort geeignet.

Zur Lösung der oben genannten Aufgabe bezüglich des Wettergeschehens im Nahbereich mit einer Maximalentfernung von 50-150 km vom Standort eignet sich ein Verfahren zur Überwachung des Wettergeschehens mittels Analyse der Bewegung von Luftmassen, das dadurch gekennzeichnet ist, daß man die Bewegung der Luftmassen bestimmt, indem man in der Atmosphäre entstehende, im wesentlichen vertikal polarisierte elektromagnetische Strahlung im Frequenzband von im wesentlichen 15-30 kHz mit einer richtungsselektiven VLF-Empfangsanlage empfängt, die Häufigkeiten derjenigen Ereignisse bestimmt und in mindestens zwei Klassen anzeigt, die eine im wesentlichen glatt verlaufende Form mit einer ersten Phase hoher Amplitude und einer zweiten, umgekehrt gerichteten Phase niedrigerer Amplitude, im wesentlichen ähnlich der Form des statischen Terms aufweisen, gegebenenfalls deren Amplituden bestimmt und mindestens zwei Stufen anzeigt.

0128572

Weitere bevorzugte Ausführungsformen der erfindungsgemäßen Verfahren ergeben sich ebenso aus den Unteransprüchen, wie Vorrichtungen zur Ausführung der erfindungsgemäßen Verfahren.

Die erfindungsgemäßen Verfahren machen sich das Phänomen zunutze, daß bei Relativbewegungen von Luftmassen elektromagnetische Schwingungen unter anderem im langwelligen Bereich entstehen. Diese vom Wettergeschehen hervorgerufene elektromagnetische Strahlung ist zwar auch bis in den sehr hochfrequenten Bereich meßbar, jedoch wird dann die "natürliche" Strahlung durch die Signale technischer Sender überdeckt bzw. gestört.

Durch die erfindungsgemäßen Verfahren ist es möglich, auch an Standorten, an denen sich keine metereologischen Stationen befinden, genaue Voraussagen über bestimmte Formen des momentanen Wettergeschehens zu erhalten und durch den Vergleich mehrerer zeitlich aufeinander folgender Analysen Wettervorhersagen machen zu können.

Weiterhin ist es durch die erfindungsgemäßen Verfahren möglich, unabhängig von der Tageszeit Wetterereignisse, wie z.B. Wirbelstürme etc. in größerer Entfernung zu beobachten, was bisher nur mittels Satellitenaufnahmen und speziellen Flugzeugen ausschließlich zur Tageszeit (bei Licht) möglich war.

Ein besonderer Vorteil des erfindungsgemäßen Verfahrens zur Überwachung des Wettergeschehens im Nahbereich liegt darin, daß auch Luftmassenbewegungen, die keine sichtbaren Effekte, wie Wolkenbildung etc. mit sich bringen, beobachtet werden können.

Weitere Vorteile gehen auch aus den nachfolgenden Ausführungsbeispielen der Vorrichtungen zur Durchführung des erfindungsgemäßen Verfahrens hervor.

Zum besseren Verständnis der vorliegenden Erfindung werden im folgenden ein Teil der bevorzugten Ausführungsformen der Vorrichtungen zur Durchführung der erfindungsgemäßen Verfahren anhand von Abbildungen näher erläutert. Hierbei zeigt

Figur 1    eine Blockschaltbildung einer Vorrichtung zur Durchführung des Verfahrens zur Analyse des Wettergeschehens im Fernbereich,

Figur 2    eine schematische Darstellung der Antennenanlagen,

Figur 3    eine bevorzugte Ausführungsform der Vorrichtung zur Analyse des Wettergeschehens im Fernbereich,

Figur 4    eine bevorzugte Ausführungsform der erfindungsgemäßen Vorrichtung zur Bestimmung des Wettergeschehens im Nahbereich,

Figur 5    eine bevorzugte Ausführungsform einer Logikschaltung zur Analyse des Wettergeschehens,

Figur 6    eine bevorzugte Ausführungsform einer Schaltung zur Kompensation der umweltbedingten Schwankungen der Empfangsleistung, und

Figur 7    eine bevorzugte Ausführungsform zur Regelung der Empfangsleistung.

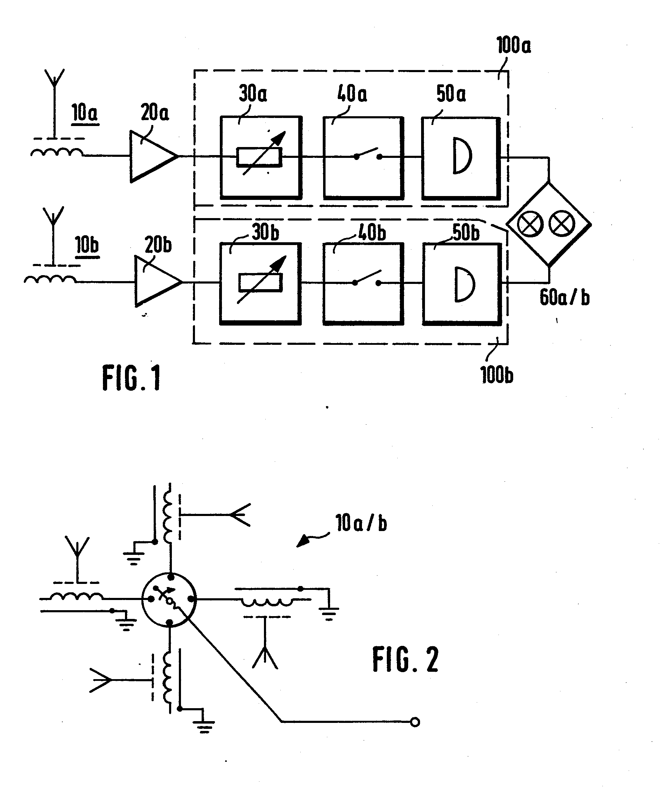

Im folgenden wird eine Vorrichtung zur Durchführung des Verfahrens zur Analyse des Wettergeschehens im Fernbereich anhand der Figur 1 näher beschrieben.

Die Anlage weist zwei richtungsselektive Antennenanlagen 10a,10b auf, denen jeweils Vor- bzw. Antennenverstärker 20a,20b nachgeschaltet sind. Hierbei ist die erste Antenne 10a dem Empfang elektrisch vertikal polarisierter elektromagnetischer Strahlung ausgerichtet, die Antenne 10b entsprechend dem Empfang elektrisch horizontal polarisierter elektromagnetischer Strahlung. Die Antennenanlage 10a ist auf einen Frequenzbereich von etwa 25 kHz-30 kHz abgestimmt,die Antenne 10b weist eine im wesentlichen linear verlaufende Empfangsempfindlichkeit im Frequenzbereich zwischen 3 kHz und 100 kHz auf.

Den Antennenanlagen sind jeweils Verarbeitungskanäle 100a bzw. 100b nachgeschaltet. Das aus den Antennenanlagen kommende Signal gelangt zuerst in Schaltungen 30a, 30b, deren Durchgangsdämpfung bzw. deren Verstärkung jeweils einstellbar ist. Bei der einfachsten Ausführungsform der erfindungsgemäßen Vorrichtung wird der Verstärkungsfaktor (Dämpfungsfaktor) von Hand entsprechend dem bekannten Tag-Nachrhythmus der Reichweite elektromagnetischer Wellen eingestellt.

Aus den Schaltungen 30a, 30b gelangen die Signale in Schaltungen 40a,40b, in denen die in der Atmosphäre "natürlich" erzeugten Signale von solchen getrennt werden, die von technischen Quellen stammen. Die Unterscheidung zwischen natürlichem und technischem Signal geschieht in diesem Fall in bekannter Weise.

Die so "gefilterten" Signale gelangen in Logikschaltungen 50a,50b, in denen die einzelnen Ereignisse über vorbestimmte Zeiträume gezählt werden, so daß an den Ausgängen

0128572

der Schaltungen 50a,50b die Ereignishäufigkeiten der beiden Kanäle 100a,100b vorliegen.

Die Ereignishäufigkeiten werden in Anzeigemitteln 60a,60b, in der einfachsten Form z.B. zwei Leuchtdioden, so angezeigt, daß zumindest das Ergebnis des Vergleiches der beiden Ereignishäufigkeiten miteinander zur Verfügung steht. Man kann hierbei so vorgehen, daß man die den beiden Verarbeitungskanälen 100a,100b zugeordneten Leuchtdioden 60a,60b nebeneinander anordnet und dann aktiviert, wenn die Ereignishäufigkeit jeweils etwa 2,5 Ereignisse pro Sekunde überschreitet. Auf diese Weise ist eine zweistufige Anzeige sowohl des Vergleichsergebnisses der beiden Ereignishäufigkeiten, als auch eine zweistufige Anzeige der beiden Ereignishäufigkeiten selbst, möglich.

Bei der oben beschriebenen Anordnung ist der Verarbeitungskanal 100b auf ein Frequenzband von 9,2-10,7 kHz abgestimmt. Mit der Vorrichtung nach Figur 1 lassen sich folgende Aussagen treffen:

60a: an; 60b: aus= Kaltfront im Anzug
60a: an; 60b: an= Kaltfront schnell im Anzug

60a: aus, 60b: an= Warmfront im Anzug.

Selbstverständlich gelten obige Aussagen für die Richtungen, auf welche die beiden Antennen 10a, 10b während der Messung ausgerichtet waren. Um Aussagen über das Wettergeschehen rings um den Standort machen zu können, muß man also entweder gleichzeitig oder nacheinander die elektromagnetische Strahlung aus den interessierenden Richtungen aufnehmen und verarbeiten. Hierzu eignen

0128572

sich sowohl bewegte Einzelantennen,als auch Anordnungen von mehreren zum Beispiel in den verschiedenen Himmelsrichtungen ausgerichteten Antennen, die nacheinander abgefragt werden. Eine derartige Antennenanlage ist schematisch in Figur 2 dargestellt, wobei es sich in dem dort gezeigten Fall um Ferritantennen mit Richtungsabschirmung handelt, wie sie für den Empfang der horizontal polarisierten Wellen (gegebenenfalls auf den Empfang vertikal polarisierter Wellen) geeignet sind. Unter Polarisationsrichtung wird hier (und im folgenden) immer die Richtung des elektrischen Vektors bezeichnet. Zum Empfang der vertikal polarisierten Wellen sind die Ferritantennen horizontal ausgerichtet, zum Empfang der horizontal polarisierten Wellen vertikal. Bei den vertikalen Antennenanordnungen muß man also geeignete Abschirmmaßnahmen vorsehen, um die Richtungsselektivität zu gewährleisten. Selbstverständlich ist es möglich, anstelle der oben beschriebenen Ferritantennenanlage auch andere Antennenanlagen zu verwenden, die für den betreffenden Frequenzbereich geeignet sind. Derartige Antennenanlagen sind in großer Vielzahl aus dem Stand der Peilfunk-Technik im Prinzip bekannt. Wenn man genauere Peilergebnisse haben will, so eignen sich auch zum Beispiel Goniometer-Peiler mit ortsfesten Antennen, mit denen über elektrische Differential-Transformatorschaltungen hoch auflösende Peilungen vorgenommen werden.

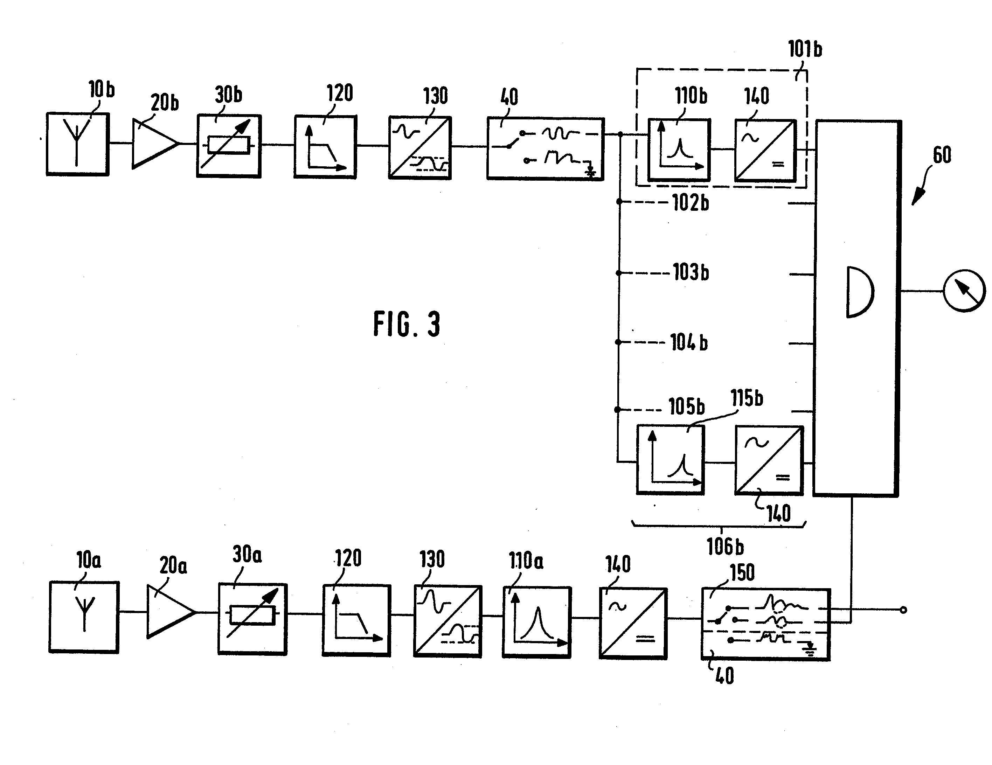

Im folgenden wird anhand der Figur 3 eine bevorzugte Ausführungsform der Vorrichtung zur Durchführung des erfindungsgemäßen Verfahrens zur Analyse des Wettergeschehens im Fernbereich näher erläutert.

Die bevorzugte Ausführungsform der erfindungsgemäßen Vorrichtung weist ebenso wie oben beschrieben zwei Antennenanlagen 10a,10b mit Verstärkern 20a,20b und

0128572

einstellbaren Dämpfungsgliedern bzw. Verstärkern 30a, 30b auf. Ebenso wie oben beschrieben ist die Antenne 10a hierbei auf den Empfang vertikal polarisierter Wellen, die Antenne 10b auf den Empfang horizontal polarisierter Wellen ausgelegt.

Die aufbereiteten Signale gelangen in Tiefpaßfilter 120, deren obere Eckfrequenz für den Betrieb der Anlage in der Bundesrepublik bei etwa 55 kHz liegt. Die obere Eckfrequenz der Tiefpaßfilter 120 wird so gewählt, daß der im Frequenzband nächste technische Sender sicher ausgeschaltet wird. Je nach Standorten können sich also andere Eckfrequenzen als notwendig bzw. möglich erweisen.

Nach dem Tiefpaß 120 gelangen die Signale in Begrenzerschaltungen 130, nach deren Durchgang die maximal auftretenden Amplituden auf eine bestimmte, die nachfolgenden Schaltungen nicht übersteuernde Höhe begrenzt ist.

Im folgenden werden die Verarbeitungskanäle für die vertikal- und die horizontal polarisierten Schwingungen getrennt beschrieben.

Im Kanal für die horizontal polarisierten Schwingungen ist nach dem Begrenzer 130 die Schaltung 140 zum Auftrennen bzw. Unterscheiden zwischen natürlicher und technischer Strahlung angebracht.

Der Ausgang der Schaltung 40 ist mit den Eingängen einer Vielzahl von Verarbeitungskanälen 101b bis 106b verbunden, die jeweils nacheinander geschaltet ein Bandpaßfilter 110b bis 115b und eine Schaltung 140 zur Bildung des

0128572

Absolutwertes des Ausgangssignales des Bandfilters aufweisen. Hierbei sind die einzelnen Bandfilter vorzugsweise auf folgende Durchlaßfrequenzen eingestellt:
3,5-4,5 kHz, 5,5-6,5 kHz, 7,5-8,5 kHz, 9,2-10,7 kHz,
11,5-12,5 kHz und 45-55 kHz. Die Ergebnisse aus den Verarbeitungskanälen 101b-106b gelangen in die Logik-Anzeigeschaltung 60, die im Prinzip oben beschrieben wurde.

Beim Verarbeitungskanal für die elektrisch vertikal polarisierten elektromagnetischen Schwingungen ist nach dem
Begrenzer 130 das Bandfilter 110a angeordnet, das vorzugsweise auf ein Frequenzband von 25-30 kHz abgestimmt ist.
Nach dem Bandpaß ist die Schaltung 140 angeordnet, in
der der Absolutwert bzw. Effektivwert der einlaufenden
Spannung gebildet wird. Derartige Schaltungen sind aus
der Meßtechnik bekannt, ein Vollweggleichrichter stellt
die einfachste Form dieser Schaltung dar.

Nach dem Absolutwertbildner 140 gelangt das Signal in
eine Schaltung 40/150, in der die Signale nach drei Möglichkeiten aufgetrennt werden. Liegt ein Störsignal eines
technischen Senders (Schaltimpulse, Elektromotoren etc)vor,
so wird das einlaufende Signal vernichtet. Liegt eine
Schwingung vor, die im wesentlichen sinusförmig über
mindestens eine vollständige Schwingung verläuft, so
liegt ein vertikal polarisierter Impuls aus dem Fernbereich vor, das Ergebnis wird der Logikschaltung 60 zur
Verschaltung mit den übrigen Signalen zugeführt. Liegt
jedoch eine Schwingungsform vor, die in etwa in ihrem
Verlauf dem statischen Term entspricht, also aus einer
ersten Phase mit hoher Amplitude und einer zweiten,
länger dauernden Phase mit niedrigerer Amplitude besteht,
so wird dieses Signal nicht der Schaltung 60 zugeführt,
da es einer natürlichen

Quelle in der näheren Umgebung entstammt.

Die oben beschriebene Schaltung 40/150 zur Auftrennung der Signale nach ihren Formen bzw. Zeit-Amplitudenverläufen kann sowohl über Analogschaltungen, als auch über Datenverarbeitungsschaltungen (Mikroprozessoren) dargestellt werden, wie dies dem Fachmann geläufig ist.

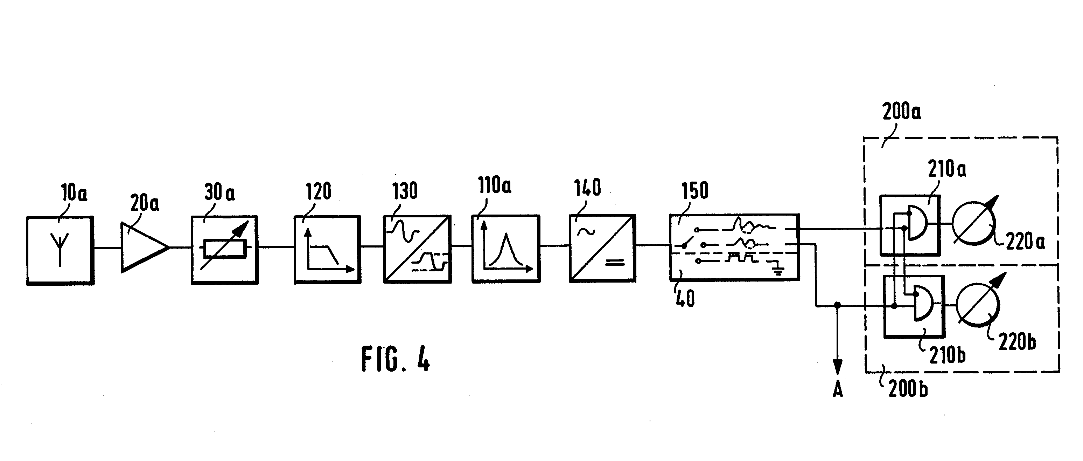

Im folgenden wird eine Vorrichtung zur Durchführung des Verfahrens zur Bestimmung des Wettergeschehens im Nahbereich anhand von Figur 4 näher erläutert.

Bei der Vorrichtung zur Durchführung des Verfahrens zur Überwachung des Wettergeschehens mittels Analyse der Bewegungen von Luftmassen im Nahbereich ist einer richtungsselektiven Antennenanlage 10a, die auf den Empfang elektrisch vertikal polarisierter elektromagnetischer Strahlung im Frequenzband von 15 kHz – 30 kHz abgestimmt ist, ein Verstärker 20a, ein einstellbares Dämpfungsglied 30a (Verstärker mit einstellbarer Verstärkung) und ein Tiefpaßfilter 120 mit einer oberen Grenzfrequenz von höchstens 55 kHz, vorzugsweise 30 kHz nachgeschaltet. Das Signal aus dem Tiefpaßfilter 120 gelangt in einen Begrenzer, wie er bereits oben beschrieben wurde. Aus dem Begrenzer gelangt das Signal über ein Bandpaßfilter 110a, das auf ein Frequenzband von 15–30 kHz abgestimmt ist, in einen Absolutwertbildner 140 (im einfachsten Fall ein Vollweggleichrichter) und von diesem in eine Schaltung 40/150 zur Aufteilung der Signalwege entsprechend der Art des empfangenen Signales. Diese Vorrichtung wurde bereits oben im Zusammenhang mit Figur 3 beschrieben.

Nach der Schaltung 150 verzweigt sich der Signalweg in zwei Kanäle 200a,200b, in denen die einlaufenden Signale jeweils gesondert verarbeitet werden. Die beiden Kanäle 200a,200b weisen hierfür Logikschaltungen 210,210b auf, in denen die Häufigkeiten der auftretenden Ereignisse bestimmt werden, die Ereignisse werden also immer wieder über eine jeweils definierte Zeitdauer gezählt. Es ist hierbei darauf zu achten, daß im Kanal 200a nur dann ein Ereignis auch zur Anzeige gebracht wird, wenn dieses Signal nicht gleichzeitig im Kanal 200b zur Anzeige gebracht wird bzw. umgekehrt.

Die Logikschaltungen 210a, 210b sind mit Anzeigeschaltungen 220a,220b verbunden, in denen die Ereignishäufigkeiten angezeigt werden.

Aus den auf den Anzeigemitteln 220a abgelesenen Werten der Impulshäufigkeiten der Signale aus dem Nahbereich lassen sich vertikale Luftströmungen zumindest im Bereich bis 50 Kilometer, oft auch bis 150 Kilometer Radius sicher erkennen. Derartige vertikale Luftströmungen treten zum Beispiel dann, wenn sich Bodennebel aufzulösen beginnen, u.zw. etwa 15-20 Minuten ehe diese Auflösung optisch erkennbar wird.

Bei einer weiteren bevorzugten Ausführungsform der erfindungsgemäßen Vorrichtungen sowohl zur Beurteilung des Wettergeschehens im Nah-, wie auch im Fernbereich sind in allen Verarbeitungskanälen für die verschiedenen Frequenzbänder Mittel (nicht gezeigt) vorgesehen, um die mittleren Amplituden der empfangenen Ereignisse zu bestimmen und anzuzeigen. Aus den Ergebnissen lassen sich insbesondere Aussagen über die Geschwindigkeit der Änderungen des Wettergeschehens bzw. auf die Geschwindigkeit des Zuges von Wetterfronten herleiten.

0128572

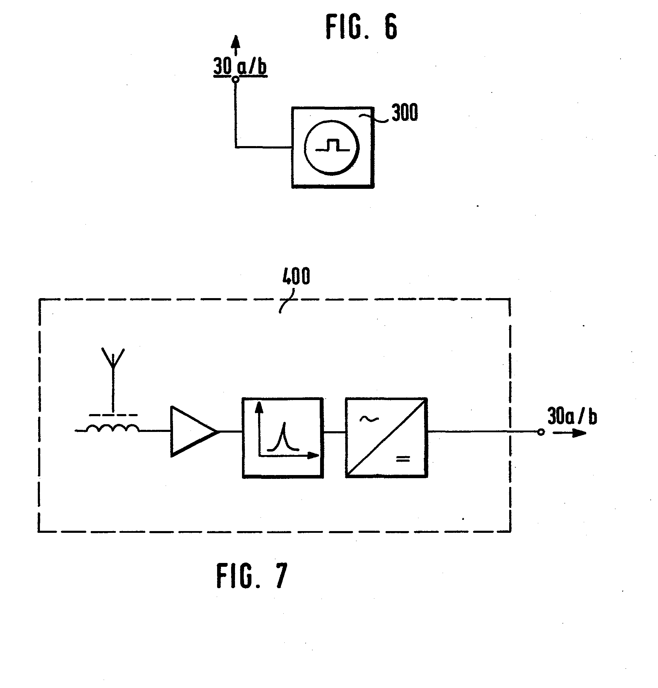

Wie oben beschrieben, werden bei allen Ausführungsformen der erfindungsgemäßen Vorrichtungen vorzugsweise einstellbare Dämpfungsglieder bzw. Verstärker mit einstellbarer Verstärkung angebracht. Vorzugsweise sind diese Dämpfungsglieder/Verstärker 30a,30b so ausgebildet, daß der Dämpfungs- bzw. Verstärkungsfaktor mittels elektrischer Signale eingestellt werden kann. In Figur 6 ist eine Vorrichtung 300 gezeigt, die einen Zeitgeber beinhaltet, der im 24-Stundenrhythmus die Dämpfungsglieder 30a,30b auf höhere bzw. niedrigere Dämpfung schaltet. Mit diesem Zeitgeber 300 wird der bekannte Tag-Nachteffekt kompensiert, der während des Tages eine höhere Dämpfung der elektromagnetischen Schwingungen in der Atmosphäre und während der Nacht eine geringere Dämpfung der Schwingungen bewirkt. Auf diese Weise ist gewährleistet, daß die Vorrichtungen im wesentlichen unabhängig von den umweltbedingten Empfangsverhältnissen arbeiten.

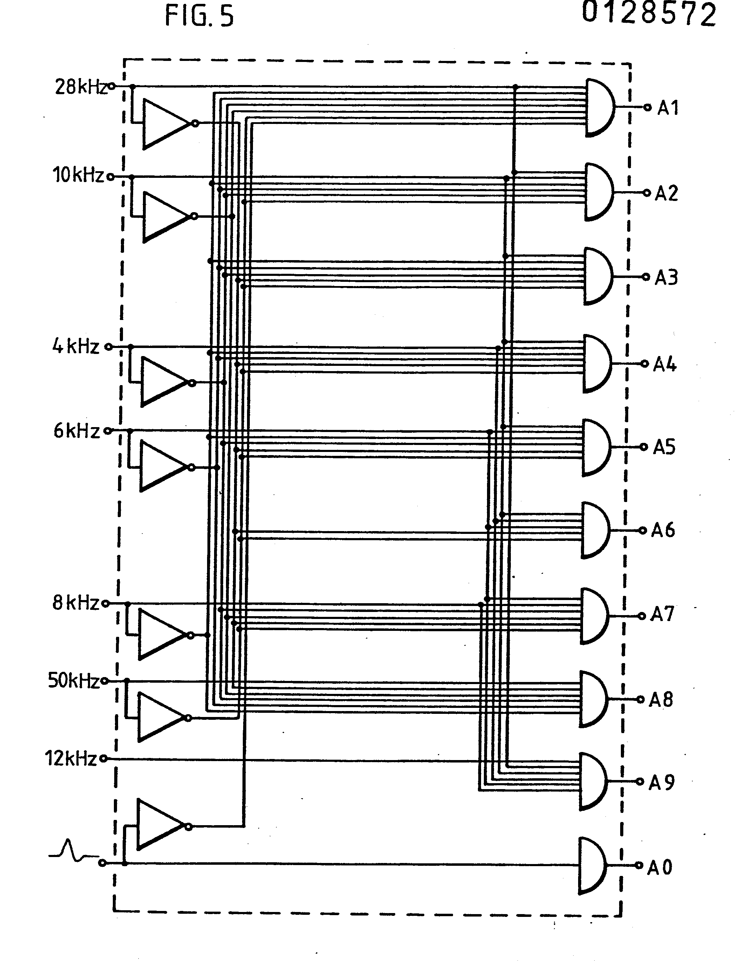

Bei einer anderen, bevorzugten Ausführungsform werden die Empfangsverhältnisse nicht nach den empirischen Werten der Tag-Nachtschwankungen, sondern direkt nach den vorliegenden Empfangsverhältnissen geregelt. Hierfür eignet sich eine Vorrichtung nach Figur 7, die eine Antenne, einen Verstärker, einen nachgeschalteten Bandpaß und einen Effektivwertbildner enthält. Die Schaltung 400 entspricht somit einem Feldstärkemeßgerät, das entsprechend dem Stand der Technik auch wesentlich aufwendiger ausgebildet sein kann. Dieses Feldstärkemeßgerät 400 wird nun auf die Sendefrequenz eines technischen Meßsenders eingestellt, der im langwelligen Bereich sendet und der nicht in der unmittelbaren Umgebung des Meßortes steht. In der Bundesrepublik Deutschland eignet sich hierfür zum Beispiel der Zeitsender Maiflingen, der bei einer Frequenz von 77,5 kHz sendet. Wenn der Meßort ortsfest ist, so entsprechen die Feldstärkeschwankungen genau den durch die Atmosphäre vorgegebenen Empfangsverhältnissen, so daß man die Verstärkung der Verstärker 30a, 30b umgekehrt proportional zur Feldstärke regeln kann. Im folgenden wird anhand der symbolischen Darstellung nach Figur 5 dargestellt, welche Aussagen man aus den Meßergebnissen treffen kann. Hierbei ist festgelegt, daß ein Signal in einem bestimmten Frequenzband dann als "nicht auftretend" gewertet wird, wenn es eine Pulsfrequenz von 2,5 Hz unterschreitet, und dann als "auftretend" gewertet wird, wenn es eine Impulsfrequenz von 2,5 Hz überschreitet. Die Verknüpfung der Ereignisse in den verschiedenen Frequenzbändern ist in Figur 5 anhand von UND-Gliedern und Invertierern aufgezeigt. Der Einfachheit halber wurden die Frequenzbänder nur anhand ihrer Mittenfrequenzen definiert. Die Ausgangssignale A0 bis A9 können anhand der beiliegenden Tabelle 1 interpretiert werden.

Aus Tabelle 1 geht hervor, daß die Vorrichtungen zur Durchführung der erfindungsgemäßen Verfahren eine Vielzahl bekannter Baugruppen enthalten, die jedoch in neuartiger Weise verknüpft sind. Hieraus geht hervor, daß man eine Reihe der Schaltungen, die hier nur in Form von Blockschaltbildern erläutert wurden, mit Hilfe von analogen, wie auch digitalen Bausteinen verarbeiten kann.

So zum Beispiel ist die Auftrennung von vertikal polarisierten elektromagnetischen Schwingungen aufgrund ihrer Form (Baugruppe 150) bzw. die Abtrennung von technisch erregten Störsignalen eine Aufgabe, die bei einer weiteren bevorzugten Ausführungsform der erfindungsgemäßen Vorrichtung mit Hilfe von Mikroprozessoren gelöst wird, wobei man die Signale über eine gewisse Zeit, die in etwa 3 bis 4 vollständigen Schwingungen entspricht, speichert und dann einer digitalen Mustererkennung mittels eines Mikroprozessors unterwirft.

Da die Ereignishäufigkeiten relativ gering sind, kann ein Mikroprozessor auch gleichzeitig die Logikschaltung 60 bilden, auch der Taktgeber 300 kann im Mikroprozessor vorgesehen sein.

-14-

### Tabelle 1

| Wetterlage | Polarisierte Bänder (kHz) | Ereignisse/ Sekunde | Aktiver Ausgang |
|---|---|---|---|
| Kaltfront nähert sich | 25-30 Vertikal | 2,5 | A1 |
| Kaltfront nähert sich zügig | 9,2 -10,7 Horizontal<br>25-30 Vertikal | 2,5 | A2 |
| Warmfront nähert sich zügig | 9,2-10,7 Horizontal | 2,5 | A3 |
| Warmluftadvektion | 3,5-4,5 Horizontal<br>9,2-10,7 Horizontal | 2,5 | A4 |
| Stabilisierungstendenz der Wetterlage | 5,5-6,5 Horizontal<br>9,2-10,7 Horizontal | 2,5 | A5 |
| Stabilisierungstendenz gesteigert | 3,5-4,5 Horizontal<br>5,5-6,5 Horizontal<br>9,2-10,7 Horizontal | 2,5 | A6 |
| Bildung trockener Schichtungen, Inversionen und Doppel-inversionen | 5,5-6,5 Horizontal<br>7,5-8,5 Horizontal | 2,5 | A7 |
| Rückseitenlage, z.B. abziehende Cyclone | 45-55 Horizontal | 2,5 | A8 |
| Gewitter (Blitz); Wetterleuchten | 25-30 Vertikal<br>3,5-4,5 Horizontal<br>5,5-6,5 Horizontal<br>7,5-8,5 Horizontal<br>9,2-10,7 Horizontal<br>11,5-12,5 Horizontal | 2,5 | A9 |
| Änderung der Grund-schichtverhältnisse (Nebel hebt sich) um den Meßort, vertikale Luftströmungen | 15-30 Vertikal (Statischer Term) | 2,5 | A0 |

0128572

Weiterhin ist der Einsatz von Mikroprozessoren dann besonders vorteilhaft, wenn man auch die Anzeige der Meßergebnisse zum Beispiel auf einem Bildschirm vornehmen will, da man dann die Ausrichtung der Antenne dem Mikroprozessor zuführen und so wetterkartenähnliche Anzeigen zur Verfügung stellen kann. Hierbei können die verschiedenen Daten zum Beispiel in verschiedenen Farben angezeigt werden, um eine größere Übersichtlichkeit zu bekommen.

Bei einer weiteren bevorzugten Ausführungsform der erfindungsgemäßen Vorrichtungen wird statt einer Vielzahl von Analog-Filtern (Bandpässe, Tiefpässe) ein FFT-Analyser vorgesehen, der zum Beispiel über CCD-Schaltungen eine Fourier-Transformation vornimmt und so die Signale aus dem Zeitbereich in den Frequenzbereich transformiert. Die Ergebnisse werden in einem Digitalspeicher gespeichert, bei dem jede Speicheradresse einer bestimmten Frequenz zugeordnet ist. Der Inhalt der jeweiligen Adressen entspricht dann der Impulsfolgefrequenz des empfangenen Signales. Die Weiterverarbeitung kann dann wieder mit anderen Mitteln vorgenommen werden, wobei es äußerst vorteilhaft ist, weiterhin digital zu arbeiten.

Die Anwendung der erfindungsgemäßen Verfahren ist auf vielen Gebieten möglich und vorteilhaft, wobei man die Vorrichtungen zur Durchführung der Verfahren vorteilhafterweise modular aufbaut, so daß entsprechend den geforderten Meßergebnissen mehr oder weniger Meßkanäle, genauere oder ungenauere Anzeigen etc. zur Verfügung stehen.

Durch die Erfassung der Luftmassenbewegungen im Nahbereich lassen sich Vorhersagen über das Auftreten und Abklingen von Smog-Erscheinungen machen. Aufgrund derartiger Meßergebnisse ist es möglich, die vorhandene Selbstreinigungsfähigkeit der Luft zu erkennen und so Hinweise zur Standortwahl für stark luftverschmutzende Industrie zu geben.

Mit Hilfe der Analyse der Signale aus dem Nahbereich lassen sich Luftströmungen in klarer Luft erkennen, wie es zum Beispiel zur Überwachung bzw. Vorwarnung des Flugverkehres an Flughäfen vorteilhaft ist.

Bei Anwendung der erfindungsgemäßen Verfahren auf See ist es möglich, anziehenden Wetterfronten zu entgehen bzw. entsprechende Vorsichtsmaßnahmen zu ergreifen. Weiterhin können die Verfahren äußerst vorteilhaft auf Schiffen zur Beurteilung der zu erwartenden Windverhältnisse eingesetzt werden, durch die Ortung von Hoch- bzw. Tiefdruckgebieten kann man vorhersagen, auf welchem Kurs die günstigsten Windverhältnisse zu erwarten sind.

Eine besonders vorteilhafte Einsatzmöglichkeit für die erfindungsgemäßen Verfahren ergibt sich aus der Notwendigkeit in Tornado-Gebieten Vorwarnungen geben zu können, um die entstehenden Schäden so gering wie möglich zu halten. Insbesondere ist es hierbei notwendig, sowohl tagsüber, wie auch nachts die Zugrichtung der Tornados zu beobachten, um auch größere Gebiete rechtzeitig evakuieren zu können.

## Patentansprüche

1. Verfahren zur Überwachung des Wettergeschehens mittels Analyse der Bewegungen von Luftmassen,

dadurch gekennzeichnet , daß

man die Bewegungen der Luftmassen bestimmt, indem man in der Atmosphäre entstehende elektromagnetische Strahlung im Frequenzbereich zwischen 3 kHz und 100 kHz mittels mindestens einer richtungsselektiven VLF-Empfangsanlage empfängt, in mindestens zwei voneinander im wesentlichen getrennte Frequenzbänder aufteilt, die innerhalb der Frequenzbänder auftretenden Ereignishäufigkeiten getrennt voneinander bestimmt, die Ereignishäufigkeiten miteinander vergleicht und das Ergebnis in mindestens zwei Stufen anzeigt.

2. Verfahren nach Anspruch 1, dadurch gekennzeichnet, daß man

- die elektromagnetische Strahlung getrennt nach ihren Polarisationsrichtungen aufnimmt, vorzugsweise eine Aufteilung in einen elektrisch horizontal- und in einen elektrisch vertikal polarisierten Anteil vornimmt,
- wobei man vorzugsweise die elektromagnetische Strahlung mindestens in die zwei Frequenzbänder 9,2 bis 10,7 kHz und 25 bis 30 kHz, vorzugsweise jedoch in folgende Frequenzbänder aufteilt:

0128572

3,5-4,5 kHz; 5,5-6,5 kHz; 7,5-8,5 kHz; 9,2-10,7 kHz; 11,5-12,5 kHz; 25-30 kHz und 45-55 kHz;

- wobei man vorzugsweise im Frequenzband von 25-30 kHz selektiv den elektrisch vertikal polarisierten Anteil der elektromagnetischen Strahlung, ansonsten selektiv den elektrisch horizontal polarisierten Anteil empfängt,

- wobei man vorzugsweise die Amplituden der Ereignisse bestimmt und in mindestens zwei Stufen anzeigt,

- wobei man vorzugsweise die Empfangsempfindlichkeit der VLF-Empfangsanlage mindestens in zwei Stufen entsprechend dem bekannten Tag-Nachteffekt der Reichweite elektromagnetischer Strahlung steuert, vorzugsweise entsprechend der gemessenen Feldstärke eines bekannten technischen Senders im benachbarten langwelligen Bereich regelt, so daß die Amplituden der empfangenen Ereignisse im wesentlichen unabhängig von der durch Umweltfaktoren bestimmten Dämpfung der elektromagnetischen Strahlung sind,

- wobei man vorzugsweise technische Störsignale von den empfangenen Ereignissen aufgrund einer Analyse von Form und/oder Dauer der Ereignisse trennt,

- und daß man vorzugsweise die Ereignisse der elektrisch vertikal polarisierten Strahlung im Frequenzband von 25-30 kHz dahingehend in zwei Klassen unterteilt, ob das Ereignis eine im wesentlich sinusoidale Form über mindestens eine vollständige Schwingung aufweist, oder ob das Ereignis eine unsymmetrische, im wesentlichen glatt verlaufende Form mit einer ersten Phase hoher Amplitude und einer

0128572

zweiten, umgekehrt gerichteten Phase niedrigerer Amplitude, im wesentlichen ähnlich der Form des statischen Terms, und die beiden Klassen getrennt voneinander anzeigt.

3. Verfahren zur Überwachung des Wettergeschehens mittels Analyse der Bewegung von Luftmassen im Nahbereich bis im wesentlichen 150 km Entfernung vom Meßort,

d a d u r c h   g e k e n n z e i c h n e t , daß man die Bewegung der Luftmassen bestimmt, indem man in der Atmosphäre entstehende, im wesentlichen vertikal polarisierte elektromagnetische Strahlung im Frequenzband von im wesentlichen 15-30 kHz mit einer richtungsselektiven VLF-Empfangsanlage empfängt, die Häufigkeit derjenigen Ereignisse bestimmt und in mindestens zwei Klassen anzeigt, die eine im wesentlichen glatt verlaufende Form mit einer ersten Phase hoher Amplitude und einer zweiten, umgekehrt gerichteten Phase niedrigerer Amplitude, im wesentlichen ähnlich der Form eines statischen Terms aufweisen, gegebenenfalls deren Amplituden bestimmt und in mindestens zwei Stufen anzeigt.

4. Verfahren nach Anspruch 3, dadurch gekennzeichnet, daß man die Empfangsempfindlichkeit der VLF-Empfangsanlage mindestens in zwei Stufen entsprechend dem bekannten Tag-Nachteffekt der Reichweite elektromagnetischer Strahlung steuert, vorzugsweise entsprechend der gemessenen Feldstärke eines bekannten technischen Senders im benachbarten langwelligen Bereich regelt, so daß die Amplituden der empfangenen Ereignisse im wesentlichen unabhängig von der durch Umweltfaktoren bestimmten Dämpfung der elektromagnetischen Strahlung sind,

- wobei man vorzugsweise technische Störsignale von den empfangenen Ereignissen aufgrund einer Analyse von Form und Dauer der Ereignisse trennt.

5. Vorrichtung zur Durchführung des Verfahrens nach Anspruch 1, g e k e n n z e i c h n e t   d u r c h

- mindestens zwei richtungsselektive Antennenanlagen (10a, 10b) ggf. mit Verstärkern (20a,20b), wobei die erste Antennenanlage (10a) auf elektrisch vertikal polarisierte elektromagnetische Strahlung im Frequenzband von ,25 kHz-30 kHz, die zweite Antennenanlage (10b) auf elektrisch horizontal polarisierte elektromagnetische Strahlung im Frequenzband von 3 kHz – 100 kHz abgestimmt ist, mindestens zwei den zwei Antenn.nanlagen (10a,10b) zugeordnete Verarbeitungskanäle (100a,100b), die jeweils Verstärker (30a,30b) mit in mindestens zwei Stufen einstellbarer Verstärkung, Schaltungen (40a,40b) zur Unterdrückung von Störsignalen technischer Quellen und Logikschaltungen (50a, 50b) zur Bestimmung der Ereignishäufigkeit aufweisen,

- wobei der Verarbeitungskanal (100b) für elektrisch horizontal polarisierte elektromagnetische Strahlung mindestens das Frequenzband von 9,2-10,7 kHz verarbeitet,

- und durch Anzeigemittel (60) mindestens zum Anzeigen eines Vergleichsergebnisses der beiden Ereignishäufigkeiten in mindestens zwei Stufen.

6. Vorrichtung nach Anspruch 5, dadurch gekennzeichnet, daß

- die Antennenanlagen (10a,10b) als Rahmen- oder Kreuzrahmenantennen, vorzugsweise als orthogonale Gruppierungen von jeweils vier gemultiplexten Ferritantennen ausgebildet sind;

- die Antennenanlage (10a) für den Empfang der elektrisch vertikal polarisierten elektromagnetischen Strahlung auf ein Frequenzband von 25-30 kHz abgestimmt ist, ggf. zusätzlich einen entsprechenden Bandpaß 110a aufweist, die Antennenanlage (10b) für den Empfang der elektrisch horizontal polarisierten elektromagnetischen Strahlung den gesamten Frequenzbereich mit im wesentlichen gleichen Empfangsleistung aufnimmt, wobei der ihr zugeordnete Verarbeitungskanal (100b) mindestens einen Bandpaß (110b) für das Frequenzband von 9,2-10,7 kHz aufweist,

- vorzugsweise daß der Verarbeitungskanal (100b) für die elektrisch horizontal polarisierte elektromagnetische Strahlung nach dem Verstärker (30b) mit einstellbarem Verstärkungsfaktor durch Bandpässe (111b, 112b, 113b, 114b, 115b) in getrennte Verarbeitungskanäle (102b, 103b, 104b, 105b, 106b) für die Frequenzbänder 3,5-4,5 kHz, 5,5-6,5 kHz, 7,5-8,5 kHz, 11,5-12,5 kHz und 45-55 kHz neben dem Verarbeitungskanal (101b) für das Frequenzband von 9,2-10,7 kHz aufgetrennt ist,

- vorzugsweise daß alle Verarbeitungskanäle (101b-106b) Tiefpaßfilter (120) mit einer Eckfrequenz von 55 kHz aufweisen,

0128572

- vorzugsweise, daß in jedem Verarbeitungskanal (100a, 100b) vor dem Bandpaß (110a, 110b bis 115b) Schaltungen (130) zur definierten Amplitudenbegrenzung angebracht sind,

- vorzugsweise daß in jedem Verarbeitungskanal (100a, 100b) nach dem Bandpaß (110a, 110b-115b) Schaltungen (140) zur Bestimmung des Signaleffektivwertes angebracht sind,

- daß nach dem Bandpaß (110a) im Übertragungskanal (100a) für die elektrisch vertikal polarisierte elektromagnetische Strahlung eine Schaltung (150) mit nachfolgenden Unterkanälen (200a, 200b) zur Unterscheidung zwischen elektromagnetischer Strahlung aus dem Fernbereich und elektromagnetischer Strahlung aus dem Nahbereich angeordnet ist, wobei die Unterkanäle (200a,200b) mit Logikschaltungen (210a,210b) der auftretenden Ereignisse und zugeordnete Anzeigeschaltungen (220a,220b) aufweisen, wobei die Unterkanäle (200a,200b) so verschaltet sind, daß bei gleichzeitigen Ereignissen aus dem Nah- und Fernbereich die Anzeige von Signalen aus dem Fernbereich verhindert wird.

- vorzugsweise, daß Mittel (500) zur Bestimmung und Anzeige der Amplituden der empfangenen elektromagnetischen Schwingungen vorgesehen sind.

7. Vorrichtung zur Durchführung des Verfahrens nach Anspruch 3,
   g e k e n n z e i c h n e t   d u r c h

- mindestens eine richtungsselektive Antennenanlage (10a) ggf. mit Verstärker (20a), die auf elektrisch vertikal polarisierte elektromagnetische Strahlung im Frequenzband von 15kHz - 30 kHz abgestimmt ist,

- einen der Antennenanlage (10a) zugeordneten Verarbeitungskanal (100a), der einen Verstärker (30a) mit in mindestens zwei Stufen einstellbarer Verstärkung, eine Schaltung (40a) zur Unterdrückung von Störsignalen technischer Quellen und eine Logikschaltung (50a) zur Bestimmung der Ereignishäufigkeit und eine Anzeigeschaltung (60a) zur Anzeige des Bestimmungsergebnisses aufweist.

8. Vorrichtung nach Anspruch 7, dadurch gekennzeichnet, daß die Antennenanlage (10a) als Rahmen- oder Kreuzrahmenantenne, vorzugsweise als Gruppierung von vier gemultiplexten Ferritantennen, von denen jeweils zwei im 90°-Winkel zueinander angeordnet sind (11a) ausgebildet ist und auf ein Frequenzband von 25-30 kHz abgestimmt ist,

- vorzugsweise, daß der Verarbeitungskanal (100a) ein Tiefpaßfilter (120a) mit einer oberen Eckfrequenz von 55 kHz aufweist,

- vorzugsweise, daß vor dem Bandpaß (110a) eine Schaltung (130) zur definierten Amplitudenbegrenzung angebracht ist,

- vorzugsweise, daß nach dem Bandpaß (110a) eine Vollweggleichrichterschaltung (140) angebracht ist,

- und daß der Verarbeitungskanal (100a) eine Schaltung (150) mit nachfolgenden Unterkanälen (200, 200b) zur Unterscheidung zwischen elektromanetischer Strahlung aus dem Fernbereich und elektromagnetischer Strahlung aus dem Nahbereich aufweist, wobei die Unterkanäle (200a, 200b) Logikschaltungen (210a,210b) zur Bestimmung der Häufigkeiten der auftretenden Ereignisse und zugeordnete Anzeigeschaltungen (220a,220b) aufweisen und so verschaltet
sind, daß bei gleichzeitigen Ereignissen aus dem Nah-
und Fernbereich die Anzeige von Signalen aus dem Fernbereich
verhindert wird,

- vorzugsweise, daß Mittel zur Bestimmung und Anzeige
der Amplituden der empfangenen elektromagnetischen
Schwingungen vorgesehen sind.

9. Vorrichtung nach Anspruch 5, dadurch gekennzeichnet,
daß der Steuereingang des Verstärkers (30b) mit einstellbarem Verstärkungsfaktor mit einem Zeitgeber
(300) verbunden ist, dessen Ausgangssignal synchron
zum Tag-Nachtrhythmus entsprechend den Schwankungen
der Reichweite der elektromagnetischen Strahlung verläuft.

10. Vorrichtung nach Anspruch 7, dadurch gekennzeichnet,
daß der Steuereingang des Verstärkers (30a) mit
einstellbarem Verstärkungsfktor mit einem Zeitgeber
(300) verbunden ist, dessen Ausgangssignal synchron
zum Tag-Nachtrhythmus entsprechend den Schwankungen
der Reichweite der elektromagnetischen Strahlung
verläuft.

11. Vorrichtung nach Anspruch 5, dadurch gekennzeichnet, daß der Steuereingang des Verstärkers (30b)
mit einstellbarem Verstärkungsfaktor mit dem Ausgang eines Feldstärkemeßgerätes (400) verbunden
ist, mit dessen Ausgangssignal der Feldstärke
eines räumlich entfernten technischen Meßsenders
entspricht, der im benachbarten Frequenzbereich
sendet.

0128572

12. Vorrichtung nach Anspruch 7, dadurch gekennzeichnet, daß der Steuereingang des Verstärkers (30a) mit einstellbarem Verstärkungsfaktor mit dem Ausgang eines Feldstärkemeßgerätes (400) verbunden ist, mit dessen Ausgangssignal der Feldstärke eines räumlich entfernten technischen Meßsenders entspricht, der im benachbarten Frequenzbereich sendet.

FIG.1

FIG. 2

0128572

FIG. 3

FIG. 4

FIG. 5

4/5

0128572

FIG. 6

30 a/b

300

400

30a/b

FIG. 7